(19) Europäisches Patentamt
European Patent Office
Office européen des brevets

(11) **EP 3 202 795 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
***C08F 220/18*** *(2006.01)*    ***C09J 133/08*** *(2006.01)*

(21) Anmeldenummer: **17153877.0**

(22) Anmeldetag: **31.01.2017**

(54) **VERWENDUNG EINER KLEBSTOFFDISPERSION FÜR DIE GLANZFOLIENKASCHIERUNG**

USE OF AN ADHESIVE DISPERSION FOR GLOSSY FILM LAMINATION

UTILISATION D'UNE DISPERSION D'ADHÉSIF POUR LE LAMINAGE BRILLANT DE FILMS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2016 EP 16154660**

(43) Veröffentlichungstag der Anmeldung:
**09.08.2017 Patentblatt 2017/32**

(73) Patentinhaber: **BASF SE**
**67056 Ludwigshafen am Rhein (DE)**

(72) Erfinder:
• **Heckhoff, Lars**
**69517 Gorxheimertal (DE)**
• **Pietsch, Ines**
**67346 Speyer (DE)**
• **Dimmer, Joerg-Alexander**
**68161 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 0 622 434    EP-A1- 1 420 055**

**Beschreibung**

Die Erfindung betrifft die Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend bestimmte Mengen an 2-Ethylhexylacrylat, n-Butylacrylat, C1 bis C2 Alkyl(meth)acrylat, optional bestimmte weitere Monomere, Monomere mit mindestens einer Säuregruppe, und Monomere mit mindestens einer Keto- oder Aldehydgruppe; wobei die wässerige Polymerdispersion mindestens eine Verbindung A enthält, welche mindestens zwei funktionelle Gruppen aufweist, die mit den Keto- oder Aldehydgruppen eine Vernetzungsreaktion eingehen können.

Es besteht ein großer Bedarf an kostengünstigen Klebstoffen für die Glanzfolienkaschierung mit guten anwendungstechnischen Eigenschaften, z.B. für die Herstellung von mit Glanzfolien beschichteten Druckerzeugnissen. Es wurden Klebstoffsysteme auf Basis von organischen Lösungsmitteln eingesetzt, aber zur Reduzierung von organischen Lösemittelemissionen werden wasserbasierte Klebstoffsysteme bevorzugt. Hierbei handelt es sich in der Regel um wässrige Polymerdispersionen. Besondere Bedeutung haben Acrylatesterpolymerdispersionen, auch bekannt als Acrylatlatex. Die Verwendung von Acrylatesterpolymerdispersionen für die Glanzfolienkaschierung ist beschrieben in WO 03/011993, EP 0900651, EP 2719532 EP1420055, EP0622434 und EP 0941259. Die Polymere in den Ausführungsbeispielen enthalten einen relativ hohen Gehalt an Butylacrylat.

Bei der Glanzfolienkaschierung werden häufig Druckerzeugnisse mit einer transparenten Polymerfolie kaschiert, wobei die erhaltenen Laminate geprägt und/oder genutet werden. Wichtig ist eine möglichst hohe Prägefestigkeit und eine möglichst hohe Nutstandfestigkeit, d.h. dass im Bereich der Nutung oder Prägung die Verklebung mit der Polymerfolie möglichst stabil ist. Hierfür ist in der Regel eine möglichst hohe Kohäsion (innere Haftung) des Klebstoffs erforderlich. Andererseits wird eine möglichst hohe Schälfestigkeit (Adhäsion) gewünscht.

Gute Nutung und Prägung kann durch eine Vernetzung des Klebstoffpolymers erreicht werden. Bekannt sind Systeme auf Basis von Acrylatlatex u.a. mit einer Kombination von Ketomonomeren wie z.B. DAAM (Diacetonacrylamid) mit Dihydraziden, z.B. ADDH (Adipinsäuredihydrazid), siehe z.B. WO 03/011993 (insbesondere Beispiele 1 bis 4) oder EP 0900651 (insbesondere Beispiel 15). Die für eine hohe Nutstandfestigkeit gewünschte hohe Kohäsion beeinträchtigt allerdings häufig die Schälfestigkeit, insbesondere bei den bekannten, auf Butylacrylat als Hauptmonomer basierenden Acrylatlatices.

Es bestand daher die Herausforderung, einen Klebstoff zur Verfügung zu stellen, mit welchem die anscheinend gegenläufigen Anforderungen von hoher Nutstandfestigkeit einerseits und hoher Schälfestigkeit andererseits gleichzeitig möglichst gut erfüllt werden.

Es wurde gefunden, dass die Aufgabe gelöst werden kann durch die Verwendung der nachfolgend näher erläuterten Klebstoffdispersionen. Gegenstand der Erfindung ist die Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend

>    (a) 40 bis 70 Gew.%, bezogen auf die Summe aller Monomere, 2-Ethylhexylacrylat,
>    (b) 0 bis 10 Gew.%, bezogen auf die Summe aller Monomere, n-Butylacrylat,
>    (c) 25 bis 55 Gew.%, bezogen auf die Summe aller Monomere, mindestens eines C1 bis C2 Alkyl(meth)acrylats,
>    (d) 0 bis 10 Gew.%, bezogen auf die Summe aller Monomere, mindestens eines weiteren Monomers, ausgewählt aus der Gruppe bestehend aus von den Monomeren (a) bis (b) verschiedenen C3 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamiden, C1 bis C20 Hydroxyalkyl(meth)acrylaten oder Mischungen dieser Monomeren,
>    (e) 0,1 bis 5 Gew.%, bezogen auf die Summe aller Monomere, mindestens eines Monomeren mit mindestens einer Säuregruppe, und
>    (f) 0,1 bis 5 Gew.%, bevorzugt 0,2 bis 3 Gew.%, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen.

Die erfindungsgemäße wässerige Polymerdispersion enthält ferner eine Verbindung A, welche mindestens zwei funktionelle Gruppen beinhaltet, die mit der Keto- oder Aldehydgruppe eine Vernetzungsreaktion eingehen kann. Für eine optimale Vernetzung wird vorzugsweise die Menge dieser zweiten Komponente so gewählt, dass ein Molekül der zweiten Komponente mit zwei Keto- oder Aldehydfunktionen der ersten Komponente eine verbrückende chemische Verbindung aufbaut.

Die erfindungsgemäß verwendete Klebstoffdispersion enthält als wesentlichen Bestandteil ein Polymer, welches durch Emulsionspolymerisation hergestellt wird; bei dem dispergierten Polymer handelt es sich daher um ein Emulsionspolymerisat.

Gegenstand der Erfindung ist auch ein Verfahren zur Glanzfolienkaschierung, welches die folgenden Maßnahmen aufweist

(i) Bereitstellen eines ersten Substrats, ausgewählt aus Polymerfolien, vorzugsweise aus transparenten Polymerfolien,

(ii) Bereitstellen eines zweiten Substrats, ausgewählt aus Papier, Karton und Pappe, wobei das zweite Substrat vorzugsweise bedruckt ist,

(iii) Aufbringen einer Klebstoffdispersion, welche die auf die Klebstoffdispersion bezogenen Merkmale der vorhergehenden Verwendungsansprüche aufweist, auf mindestens eine Oberfläche des ersten und/oder des zweiten Substrats mit anschließendem Trocknungsschritt und

(iv) Laminieren der Polymerfolie auf das zweite Substrat.

Gegenstand der Erfindung ist auch ein Laminat, erhältlich durch das erfindungsgemäße Verfahren.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur kann durch Differential Scanning Calorimetrie (ASTM D 3418-08, sogenannte "midpoint temperature") bestimmt werden. Die Glasübergangstemperatur des Polymerisats der Polymerdispersion ist die bei Auswertung der zweiten Heizkurve (Heizrate 20° C/min) erhaltene Glasübergangstemperatur.

Bei der Glanzfolienkaschierung wird ein erstes Substrat mit einem zweiten Substrat laminiert, wobei es sich bei dem ersten Substrat um eine transparente Polymerfolie und bei dem zweiten Substrat um Papier, Karton oder Pappe handelt, wobei die Laminierung vorzugsweise unter Druck und Erwärmen erfolgt.

Das Polymer wird aus einem ersten Monomer (a) hergestellt, wobei es sich um 2-Ethyl-hexylacrylat (EHA) handelt, welches in einer Menge von 40 bis 70 Gew.% vorzugsweise 45 bis 70 Gew.%, bezogen auf die Summe aller Monomere, eingesetzt wird.

Das Monomerengemisch zur Herstellung des Polymers enthält nur wenig oder kein n-Butylacrylat, das heißt 0 bis 10 Gew.%, bezogen auf die Summe aller Monomere, vorzugsweise weniger als 10 Gew.%, z.B. 0 bis 8 Gew.% oder 0 bis 4 Gew.%, besonders bevorzugt kein n-Butylacrylat.

Das Polymer wird zu 5 bis 55 Gew.%, bezogen auf die Summe aller Monomere, aus einer Monomerart (c) hergestellt, wobei es sich um mindestens ein C1 bis C2 Alkyl(meth)acrylat handelt, z.B. Methylacrylat, Methylmethacrylat oder Ethylacrylat. Bevorzugt sind Ethylacrylat, Methylmethacrylat und deren Gemisch. Besonders bevorzugt ist entweder Methylmethacrylat als einziges Monomer (c) oder eine Kombination von Methylmethacrylat und Ethylacrylat.

Das Polymer kann zu 0 bis 10 Gew.%, bezogen auf die Summe aller Monomere, aus mindestens einem weiteren Monomer (d) hergestellt werden. Die Monomere (c) können ausgewählt sein aus von den Monomeren (a) und (b) verschiedenen C3 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamiden, C1 bis C20 Hydroxyalkyl(meth)acrylaten oder Mischungen dieser Monomeren.

Monomere (d) sind z. B. (Meth)acrylsäurealkylester mit einem $C_3$-$C_{10}$-Alkylrest, z.B. n-Hexylacrylat oder, Octylacrylat sowie Mischungen dieser Monomere. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. (Meth)acrylamide sind z.B. Acrylamid und Methacrylamid. C1 bis C20 Hydroxyalkyl(meth)acrylate sind z.B. ausgewählt aus Hydroxyethyl(meth)acrylat, Hydroxypropyl(meth)acrylat, Hydroxybutyl(meth)acrylat und deren Gemisch. Bevorzugt sind Hydroxyethyl(meth)acrylat und Hydroxypropyl(meth)acrylat.

Das Polymer wird aus einer weiteren Monomerart (e) hergestellt. Die Monomerart (e) kann zu 0,1 bis 5 Gew.%, besonders bevorzugt von 0,2 bis 4 Gew. % oder von 0,5 bis 3 Gew.%, bezogen auf die Gesamtmenge der zur Herstellung des Polymers eingesetzten Monomere, enthalten sein. Monomere (e) sind eine oder mehrere Säuremonomere. Säuremonomere sind ethylenisch ungesättigte, radikalisch polymerisierbare Monomere, welche mindestens eine Säuregruppe aufweisen. Die Säuremonomere umfassen sowohl Monomere, die wenigstens eine saure Gruppen enthalten, als auch deren Anhydride und deren Salze. Zu den Säuremonomeren zählen alpha,beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze, z.B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugte Säuremonomere sind alpha,beta-monoethylenisch ungesättigte C3-C8-Carbonsäuren und C4-C8-Dicarbonsäuren, z.B. Itaconsäure, Crotonsäure, Vinylessigsäure, Acrylamidoglykolsäure, Acrylsäure und Methacrylsäure, sowie deren Anhydride. Besonders bevorzugt sind Acrylsäure, Methacrylsäure und Itaconsäure und deren Gemisch, besonders bevorzugt ist Acrylsäure.

In der vorliegenden Erfindung enthält die Polymerdispersion Keto-oder Aldehydgruppen. Die Keto- oder Aldehydgruppen können durch Copolymerisation von geeigneten Monomeren (f) an das Polymer gebunden werden. Die Monomerenmischung besteht zu mindestens 0,1 Gew.-%, oder zu mindestens 0,2 Gew.%, z.B. zu 0,1 bis 5 Gew. %, oder zu 0,2 bis 3 Gew. %. aus ethylenisch ungesättigten Monomeren mit mindestens einer funktionellen Gruppe, ausgewählt aus Ketogruppen und Aldehydgruppen.

Monomere (f) sind z.B. ausgewählt aus der Gruppe bestehend aus Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto- oder Aldehydgruppen, bzw. einer Aldehyd- und einer Ketogruppe im Alkylrest wobei der Alkylrest vorzugsweise insgesamt 3 bis 10 C-Atome umfasst, z.B. (Meth)acryloxyalkylpropanale, wie sie z.B. in der DE-A 2 722 097 beschrieben sind. Des Weiteren eignen sich auch N-Oxoalkyl(meth)acrylamide wie sie z. B. aus der DE-A 2 061 213 oder DE-A 2 207 209 bekannt sind, z.B. solche der Formel R-C(=O)-R'-NH-C(=O)-CR"=CH$_2$, wobei R und R" unabhängig voneinander Wasserstoff oder eine Kohlenwasserstoffgruppe (vorzugsweise Alkyl) mit 1 bis 10 C-Atomen bedeuten und R' eine Kohlenwasserstoffgruppe (vorzugweise Alkylen) mit 2 bis 15 C-Atomen bedeutet. Besonders bevorzugt sind Acetoacetyl(meth)acrylat, Acetoacetoxyethyl(meth)acrylat und insbesondere Diacetonacrylamid.

Die erfindungsgemäß einzusetzenden Polymere enthalten ferner mindestens eine Verbindung A mit mindestens 2 funktionellen Gruppen, insbesondere 2 bis 5 funktionellen Gruppen, die mit den Keto- oder Aldehydgruppen eine Vernetzungsreaktion eingehen. Verbindungen, die mit den Keto- oder Aldehydgruppen eine Vernetzungsreaktion eingehen können sind z.B. Verbindungen mit Hydrazid-, Hydroxylamin-, Oximether- oder Aminogruppen. Geeignete Verbindungen mit Hydrazidgruppen sind z.B. Polycarbonsäurehydrazide mit einem Molgewicht von vorzugsweise bis zu 500 g/mol. Bevorzugte Hydrazidverbindungen sind Dicarbonsäuredihydrazide mit bevorzugt 2 bis 10 C-Atomen. Genannt seien z.B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin. Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein.

Vorzugsweise ist Verbindung A ein Dicarbonsäuredihydrazid mit 2 bis 10 C-Atomen und Monomer (f) ausgewählt aus Acetoacetyl(meth)acrylat, Acetoacetoxyethyl-(meth)acrylat und Diacetonacrylamid. Besonders bevorzugt ist Verbindung A Adipinsäuredihydrazid und Monomer (f) Diacetonacrylamid.

Die Menge der Verbindung mit den funktionellen Gruppen wird vorzugsweise so bemessen, dass das Molverhältnis der mit Keto- bzw. Aldehydgruppen reaktiven funktionellen Gruppen zu den Keto-und/oder Aldehydgruppen des Polymeren 1 : 10 bis 2 : 1, insbesondere 1 : 5 bis 2 : 1, besonders bevorzugt 1 : 2 bis 2 : 1 und ganz besonders bevorzugt 1 : 1,3 bis 1,3 : 1 beträgt. Insbesondere sind äquimolare Mengen der funktionellen Gruppen und der Keto- und/oder Aldehydgruppen bevorzugt.

Vorzugsweise umfasst das Monomerengemisch außer den Monomeren (f) keine weiteren vernetzenden Monomere. Weitere vernetzende Monomere wären z.B. Monomere mit angebundenem Fotoinitiator, Silanverbindungen, Epoxide oder Verbindungen mit Glycidylgruppen.

Ein bevorzugtes Polymer ist z. B. wie folgt aufgebaut aus:

(a) 40 bis 70 Gew.%, bezogen auf die Summe aller Monomere, 2-Ethylhexylacrylat,
(c) 25 bis 55 Gew.%, bezogen auf die Summe aller Monomere, Methylmethacrylat oder eines Gemisches aus Ethylacrylat und Methylmethacrylat,
(e) 0,1 bis 5 Gew.%, bezogen auf die Summe aller Monomere, mindestens eines Monomeren mit mindestens einer Säuregruppe, ausgewählt aus Acrylsäure, Methacrylsäure und deren Gemisch und
(f) 0,2 bis 3 Gew.%, bezogen auf die Gesamtmenge an Monomeren, mindestens einer ethylenisch ungesättigten Verbindung mit mindestens einer Ketogruppe ausgewählt aus der Gruppe bestehend aus Acetoacetyl(meth)acrylat, Acetoacetoxyethyl(meth)acrylat und Diacetonacrylamid;

wobei Verbindung A ein Dicarbonsäuredihydrazid mit 2 bis 10 C-Atomen ist.

Die Mengen der Monomere werden vorzugsweise so gewählt, dass die Glasübergangstemperatur im Bereich von -25 °C bis -15 °C liegt. Durch gezielte Variation von Art und Menge der Monomeren ist es dem Fachmann möglich, wässrige Polymerzusammensetzungen herzustellen, deren Polymere eine Glasübergangstemperatur im gewünschten Bereich aufweisen.

Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die Herstellung des Polymers kann durch Emulsionspolymerisation erfolgen, es handelt sich dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte $C_8$- bis $C_{36}$-Fettalkohole mit einem Ethoxylierungsgrad von 3 bis 50, ethoxylierte Mono-, Di- und Tri- $C_4$- bis $C_{12}$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationische Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z.B. tert.-Butylhydroperoxid. Geeignet sind auch sogenannte Reduktions-Oxidations(Red-Ox)-Initiator-Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im Allgemeinen an das Kettenende. Die Menge der Regler kann insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylester, Mercaptoethynol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet.

Die Monomerzufuhr kann als Batchprozess, kontinuierlich oder stufenweise erfolgen. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Falls ein Molekulargewichtsregler verwendet wird, kann auch der Regler zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

In einer Ausführungsform der Erfindung erfolgt die Herstellung des Polymers einstufig.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymer wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 500 nm, insbesondere kleiner 400 nm. Besonders bevorzugt liegt die mittlere Teilchengröße zwischen 200 und 350 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Die erfindungsgemäße Klebstoffdispersion kann Additive enthalten. Die Additive sind z.B. ausgewählt aus Füllstoffen, Farbstoffen, Verlaufshilfsmitteln, Verdickern, vorzugsweise Assoziativverdicker, Entschäumer, Weichmachern, Pigmenten, Netzmitteln, UV-Schutzmitteln und Tackifiern. Für eine bessere Benetzung von Oberflächen können die Klebstoffdispersionen insbesondere Benetzungshilfsmittel, z. B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Die Klebstoffdispersionen werden erfindungsgemäß verwendet zur Glanzfolienkaschierung. Bei der Glanzfolienkaschierung wird eine Polymerfolie, vorzugsweise eine transparente Polymerfolie, auf Papier, Karton oder Pappe verklebt. In einer bevorzugten Ausführungsform wird die Klebstoffdispersion verwendet um eine transparente Polymerfolie auf ein Substrat zu kaschieren, wobei es sich bei dem Substrat um Papier, Karton oder Pappe handelt, wobei die Kaschierung unter Druck und Erwärmen erfolgt. Das Substrat ist vorzugsweise farbig und/oder bedruckt.

Die vorliegende Erfindung betrifft somit auch ein Verfahren zur Folienkaschierung, bei dem man die oben beschriebene Klebstoffdispersion einsetzt. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, weitere Schutzkolloide, Lichtschutzstabilisatoren, Biozide, Entschäumer usw. Das Verfahren zur Glanzfolienkaschierung weist die folgenden Maßnahmen auf:

(i) Bereitstellen eines ersten Substrats, ausgewählt aus Polymerfolien, vorzugsweise aus transparenten Polymerfolien,
(ii) Bereitstellen eines zweiten Substrats, ausgewählt aus Papier, Karton und Pappe, wobei das zweite Substrat vorzugsweise bedruckt ist,
(iii) Aufbringen der oben näher beschriebenen Klebstoffdispersion auf mindestens eine Oberfläche des ersten und/oder des zweiten Substrats mit anschließendem Trocknungsschritt und
(iv) Laminieren der Polymerfolie auf das zweite Substrat.

Das Laminieren erfolgt in der Regel unter Druck und Erwärmen.

Bei dem erfindungsgemäßen Verfahren zur Folienkaschierung wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 g/m$^2$, besonders bevorzugt 1 bis 10 g/m$^2$ z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 30 bis 100 °C und der Druck z. B. 100 bis 3000 kN/m$^2$, vorzugsweise 300 bis 2000 kN/m$^2$ betragen kann.

Vorzugsweise wird die erfindungsgemäße Klebstoffdispersion als Einkomponentenmittel angewendet, d.h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine zusätzliche Vernetzungskomponente, wie z.B. ein wasseremulgierbares Isocyanat, zugesetzt wird.

Vorzugsweise wird das Glanzfolienlaminat hergestellt unter Verwendung einer der oben beschriebenen erfindungsgemäßen wässrigen Polymerdispersionen, wobei das Material einer transparenten Polymerfolie ausgewählt ist aus orientiertem Polypropylen (OPP), ungerecktem Polypropylen (CPP), Polyethylen (PE), Polyamid (PA), Polyethylenterephthalat (PET), Polyacetat und Zellophan und wobei das Material des zweiten Substrats ausgewählt ist aus Papier, Karton und Pappe. In einer Ausführungsform der Erfindung ist das zweite Substrat auf der Seite, welche mit der erfindungsgemäßen Polymerdispersion beschichtet wird, farbig oder bedruckt. Die Dicke der Polymerfolie kann beispielsweise von 5 bis 100 $\mu$m, vorzugsweise von 5 bis 40 $\mu$m betragen.

Vorzugsweise weist die Polymerfolie an der mit der Klebstoffdispersion in Kontakt kommenden Oberfläche hydrophile Gruppen auf. Hydrophile Gruppen sind z.B. Sauerstoff enthaltende Gruppen beispielsweise OH-Gruppen oder Säuregruppen. Die hydrophilen Gruppen werden vorzugsweise erzeugt durch Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Substrat und Klebstoffbeschichtung verwendet werden. Außerdem können die Glanzfolienlaminate weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Substrats oder innen, zwischen Substrat und Klebstoffschicht befinden. Vorzugsweise wird als Polymerfolie eine coronabehandelte oPP-Folie verwendet.

Gegenstand der Erfindung ist auch ein Laminat, erhältlich durch das oben beschriebene Verfahren.

Besondere Vorteile der erfindungsgemäßen Verwendung, des erfindungsgemäßen Herstellverfahrens und der erfindungsgemäßen Produkte sind insbesondere:

- hohe Nutstandfestigkeit von erfindungsgemäß erhältlichen genuteten Folienlaminaten
- hohe Prägefestigkeit von erfindungsgemäß erhältlichen geprägten Folienlaminaten
- hohe Schälfestigkeit.

Beispiele

|  | Einsatzstoffe: |
|---|---|
| EHA | 2-Ethyl-hexylacrylat |
| nBA | n-Butylacrylat |
| EA | Ethylacrylat |
| MMA | Methylmethacrylat |
| AS | Acrylsäure |
| DAAM | Diacetonacrylamid |
| ADDH | Adipinsäuredihydrazid |

Beispiele 1 bis 4

Tabelle 1: Monomerzusammensetzungen zur Herstellung der Klebstoffdispersionen (Mengenangaben in Gewichtsteilen)

| Monomere | Beispiel 1 | Beispiel 2 | Beispiel 3 (Vergleich) | Beispiel 4 (Vergleich) |
|---|---|---|---|---|
| EHA | 65,5 | 47,5 | - | - |
| nBA | - | - | 76 | 77,2 |
| MMA | 32 | 20,8 | 20 | 20,3 |
| EA |  | 29,2 |  |  |
| AS | 2 | 2 | 2 | 2 |
| DAAM | 0,5 | 0,5 | 2 | 0,5 |
| Tg [°C] | -18,3 | -19,4 | -20,7 | -22,3 |

Es wurden Polymerdispersionen hergestellt aus den in Tabelle 1 und 2 aufgelisteten Monomeren mittels semi-kontinuierlicher Emulsionspolymerisation. Die so erhaltenen Polymerdispersionen wurden mittels 25-%iger wässriger Ammoniaklösung auf einen pH-Wert von 5 bis 6,5 eingestellt und anschließend bei Raumtemperatur mit einer 12 %-igen wässrigen Lösung ADDH versetzt. Die Menge ADDH wurde so gewählt, dass die berechnete Anzahl an funktionellen Hydrazidgruppen äquivalent der berechneten Anzahl der Ketogruppen des eingesetzten DAAMs ist.

Beispiele 5 bis 8

Tabelle 2: Monomerzusammensetzungen zur Herstellung der Klebstoffdispersionen (Mengenangaben in Gewichtsteilen)

| Monomere | Beispiel 5 | Beispiel 6 (Vergleich) | Beispiel 7 (Vergleich) | Beispiel 8 (Vergleich) |
|---|---|---|---|---|
| EHA | 56,5 | 48 | 39,5 | 31 |
| nBA | 10 | 20 | 30 | 40 |
| MMA | 30,5 | 29 | 27,5 | 26 |
| AS | 2 | 2 | 2 | 2 |
| DAAM | 1 | 1 | 1 | 1 |
| Tg [°C] | -18,1 | -18,5 | -18,7 | -20,3 |

Anwendungstechnische Prüfungen:

Es wurden Glanzfolienkaschierungen durchgeführt mit Polypropylenfolie (oPP, Coronavorbehandelt) auf Papier (Ikono-Gloss).

Bestimmung der Nut- und Prägestandfestigkeit:

Eine oPP-Folie (40 $\mu$m) wird auf der Corona-vorbehandelten Seite beschichtet (Auftragsgewicht: 6-8 g/m$^2$ trocken). Der Klebstoff wird für 2 Minuten mit einem Kaltluftgebläse getrocknet und dann der bedruckte Karton in der Rollenkaschierstation bei 70° C, mit einer Walzengeschwindigkeit von 5 m/Minute und einem Kaschierdruck von 6,5 bar auf die beschichtete Folie aufkaschiert. Die so hergestellte Kaschierung wird vor der Nutung und Prägung mindestens 24 Stunden bei Raumtemperatur gelagert.

Nutung:

Zur Prüfung werden die Kaschierungen in einer Hebelpresse mit Nuteinrichtung einmal von oben (Folienseite) genutet, umgedreht (Kartonseite) und in ca. 3 cm Abstand von der ersten Nut parallel dazu genutet, erneut umgedreht (Folienseite) und quer zur ersten Nut genutet, wieder umgedreht (Kartonseite) und in ca. 3 cm Abstand von der dritten Nut parallel dazu genutet. Die Nuten werden nach vorgewählten Lagerzeiten auf Ablösung der Kaschierfolie vom Karton geprüft. Kritische Punkte sind die scharfen Kanten am Rand einer Nut sowie die Kreuzungspunkte der erhabenen und vertieften Nuten.

Prägung:

Zur Prüfung werden die Kaschierungen in einem Walzenstuhl mit Prägewalze auf der Folienseite geprägt. Die Prägungen werden nach vorgewählten Lagerzeiten auf Ablösung der Kaschierfolie vom Karton geprüft.

Beurteilung:

1 Nut bzw. Prägung ist vollständig in Ordnung
2 Nut bzw. Prägung ist an einzelnen Stellen leicht geöffnet
3 Nut bzw. Prägung ist an einzelnen Stellen deutlich geöffnet
4 Nut bzw. Prägung ist vollständig offen

Bestimmung der Schälfestigkeit:

Das Laminat (Herstellung s.o.) wird in 15 mm breite Streifen geschnitten und 7 Tage bei Normklima (23° C, 50% relative Luftfeuchte) gelagert. Nach der Lagerung wird der Laminatstreifen bei 23°C im Winkel von 180° mit einer Geschwindigkeit von 300 m/min abgezogen, somit wird die Schälkraft in N/15 mm bestimmt.
Die Testergebnisse sind in Tabelle 3 zusammengefasst.

EP 3 202 795 B1

Tabelle 3: Testergebnisse Nut- und Prägefestigkeit; Schälwerte

| Beispiel | Nutung 1d | Nutung 7d | Prägung 1d | Prägung 7d | Schälwert [N/15 mm] |
|---|---|---|---|---|---|
| 1 | 1 | 1 | 1 | 1 | 5,1 |
| 2 | 1 | 1 | 1 | 1 | 5,3 |
| 3 x) | 1 | 1 | 1,5 | 1,5 | 4,0 |
| 4 x) | 1 | 1 | 1,5 | 1,5 | 4,4 |
| 5 | 1 | 1 | 1,5 | 1,5 | 4,9 |
| 6 x) | 1 | 1 | 2 | 3 | 4,3 |
| 7 x) | 1 | 1 | 2,5 | 3 | 4,1 |
| 8 x) | 1 | 1 | 2,5 | 3 | 4,0 |
| x) Vergleich | | | | | |

Normalerweise werden für gute Nutung und Prägung hohe Mengen an DAAM/ADDH benötigt, wodurch sich normalerweise die Haftung (Schälwert) verschlechtert. Durch Kombination von EHA/MMA/DAAM lässt sich dieselbe gute Nutung/Prägung auch mit-DAAM/ADDH erreichen, und die hohen Schälkräfte (größer 4,5 N/15mm, vorzugsweise größer 5 N/15mm) bleiben erhalten.
Bei steigendem BA-Anteil und sinkendem EHA-Anteil (aber in etwa konstanter Glasübergangstemperatur) wird die Haftung schlechter.

**Patentansprüche**

1. Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend

   (a) 40 bis 70 Gew.%, bezogen auf die Summe aller Monomere, 2-Ethylhexylacrylat,
   (b) 0 bis 10 Gew.%, bezogen auf die Summe aller Monomere, n-Butylacrylat,
   (c) 25 bis 55 Gew.%, bezogen auf die Summe aller Monomere, mindestens eines C1 bis C2 Alkyl(meth)acrylats,
   (d) 0 bis 10 Gew.%, bezogen auf die Summe aller Monomere, mindestens eines weiteren Monomers, ausgewählt aus der Gruppe bestehend aus von den Monomeren (a) bis (b) verschiedenen C3 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamiden, C1 bis C20 Hydroxyalkyl(meth)acrylaten oder Mischungen dieser Monomeren,
   (e) 0,1 bis 5 Gew.%, bezogen auf die Summe aller Monomere, mindestens eines Monomeren mit mindestens einer Säuregruppe, und
   (f) 0,1 bis 5 Gew.%, bevorzugt 0,2 bis 3 Gew.%, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen;

   wobei die wässerige Polymerdispersion mindestens eine Verbindung A enthält, welche mindestens zwei funktionelle Gruppen aufweist, die mit den Ketogruppen oder mit den Aldehydgruppen eine Vernetzungsreaktion eingehen können.

2. Verwendung nach dem vorhergehenden Anspruch, **dadurch gekennzeichnet, dass** die Monomere (c) ausgewählt sind aus Ethylacrylat und Methylmethacrylat oder deren Gemisch.

3. Verwendung nach einem der vorhergehenden Ansprüche, **dadurch gekennzeichnet, dass** Monomer (e) ausgewählt ist aus Acrylsäure, Methacrylsäure und Itaconsäure.

4. Verwendung nach einem der Ansprüche 1 bis 3, **dadurch gekennzeichnet, dass** die Monomere (f) ausgewählt sind aus der Gruppe bestehend aus Acrolein, Methacrolein, Vinylalkylketonen mit 1 bis 20 C-Atomen im Alkylrest, Formylstyrol, (Meth)acrylsäurealkylester mit ein oder zwei Keto- oder Aldehydgruppen oder mit einer Aldehyd- und einer Ketogruppe im Alkylrest, N-Oxoalkyl(meth)acrylamide, Acetoacetyl(meth)acrylat, Acetoacetoxyethyl(meth)acrylat und Diacetonacrylamid.

5. Verwendung gemäß einem der Ansprüche 1 bis 4, **dadurch gekennzeichnet, dass** die Verbindung A ausgewählt ist aus der Gruppe bestehend aus Verbindungen mit Hydrazid-, Hydroxylamin-, Oximether- oder Aminogruppen.

6. Verwendung gemäß einem der Ansprüche 1 bis 5, **dadurch gekennzeichnet, dass** Verbindung A ein Dicarbonsäuredihydrazid mit 2 bis 10 C-Atomen ist, und dass Monomer (f) ausgewählt ist aus Acetoacetyl(meth)acrylat, Acetoacetoxyethyl-(meth)acrylat und Diacetonacrylamid.

7. Verwendung gemäß einem der Ansprüche 1 bis 6, **dadurch gekennzeichnet, dass** Verbindung A Adipinsäuredihydrazid ist und dass Monomer (f) Diacetonacrylamid ist.

8. Verwendung nach einem der vorhergehenden Ansprüche, **dadurch gekennzeichnet, dass** die Glasübergangstemperatur des Polymers von -25 bis -15 °C beträgt, wobei die Glasübergangstemperatur durch ASTM D 3418-08 bestimmt wird.

9. Verwendung gemäß einem der Ansprüche 1 bis 8, **dadurch gekennzeichnet, dass** das Molverhältnis der mit Ketogruppen oder mit Aldehydgruppen reaktiven Gruppen der Verbindung A zu den Keto- und Aldehydgruppen des Monomers (f) von 1:1,3 bis 1,3:1 beträgt.

10. Verwendung gemäß einem der Ansprüche 1 bis 9, **dadurch gekennzeichnet, dass** das Monomerengemisch außer den Monomeren (f) keine weiteren vernetzenden Monomere umfasst.

11. Verwendung gemäß einem der Ansprüche 1 bis 10 **dadurch gekennzeichnet, dass** das Monomerengemisch kein n-Butylacrylat (b) umfasst.

12. Verwendung nach einem der vorhergehenden Ansprüche, **dadurch gekennzeichnet, dass** das Polymer erhältlich ist durch Emulsionspolymerisation aus einem Monomergemisch, bestehend aus

    (a) 40 bis 70 Gew.%, bezogen auf die Summe aller Monomere, 2-Ethylhexylacrylat,
    (c) 25 bis 55 Gew.%, bezogen auf die Summe aller Monomere, Methylmethacrylat oder eines Gemisches aus Ethylacrylat und Methylmethacrylat,
    (e) 0,1 bis 5 Gew.%, bezogen auf die Summe aller Monomere, mindestens eines Monomeren mit mindestens einer Säuregruppe, ausgewählt aus Acrylsäure, Methacrylsäure und deren Gemisch und
    (f) 0,2 bis 3 Gew.%, bezogen auf die Gesamtmenge an Monomeren, mindestens einer ethylenisch ungesättigten Verbindung mit mindestens einer Ketogruppe ausgewählt aus der Gruppe bestehend aus Acetoacetyl(meth)acrylat, Acetoacetoxyethyl(meth)acrylat und Diacetonacrylamid;

    und wobei Verbindung A ein Dicarbonsäuredihydrazid mit 2 bis 10 C-Atomen ist.

13. Verwendung nach einem der vorhergehenden Ansprüche, **dadurch gekennzeichnet, dass** die Klebstoffdispersion Additive enthält, ausgewählt aus Füllstoffen, Farbstoffen, Verlaufshilfsmitteln, Verdickern, Entschäumer, Weichmachern, Pigmenten, Netzmitteln, UV-Schutzmitteln und Tackifiern.

14. Verwendung nach einem der vorhergehenden Ansprüche, wobei ein erstes Substrat mit einem zweiten Substrat laminiert wird, wobei es sich bei dem ersten Substrat um eine transparente Polymerfolie und bei dem zweiten Substrat um Papier, Karton oder Pappe handelt, wobei die Laminierung unter Druck und Erwärmen erfolgt.

15. Verwendung nach Anspruch 14, **dadurch gekennzeichnet, dass** die Polymerfolie an der mit der Klebstoffdispersion in Kontakt kommenden Oberfläche hydrophile Gruppen aufweist, vorzugsweise erzeugt durch Coronabehandlung.

16. Verwendung nach dem vorhergehenden Anspruch, **dadurch gekennzeichnet, dass** die Polymerfolie eine coronabehandelte oPP-Folie ist.

17. Verfahren zur Glanzfolienkaschierung, welches die folgenden Maßnahmen aufweist:

(i) Bereitstellen eines ersten Substrats, ausgewählt aus Polymerfolien, vorzugsweise aus transparenten Polymerfolien,

(ii) Bereitstellen eines zweiten Substrats, ausgewählt aus Papier, Karton und Pappe, wobei das zweite Substrat vorzugsweise bedruckt ist,

(iii) Aufbringen einer Klebstoffdispersion, welche die auf die Klebstoffdispersion bezogenen Merkmale der vorhergehenden Verwendungsansprüche aufweist, auf mindestens eine Oberfläche des ersten und/oder des zweiten Substrats mit anschließendem Trocknungsschritt und

(iv) Laminieren der Polymerfolie auf das zweite Substrat.

**18.** Laminat, erhältlich durch das Verfahren gemäß dem vorhergehenden Verfahrensanspruch.

**Claims**

**1.** The use of an adhesive dispersion for high-gloss film lamination, the adhesive dispersion comprising at least one polymer in dispersion in water and formed by emulsion copolymerization of a monomer mixture comprising

(a) 40 to 70 wt%, based on the sum of all the monomers, of 2-ethylhexyl acrylate,

(b) 0 to 10 wt%, based on the sum of all the monomers, of n-butyl acrylate,

(c) 25 to 55 wt%, based on the sum of all the monomers, of at least one C1 to C2 alkyl (meth)acrylate,

(d) 0 to 10 wt%, based on the sum of all the monomers, of at least one further monomer, selected from the group consisting of C3 to C20 alkyl (meth)acrylates other than monomers (a) to (b), vinyl esters of carboxylic acids comprising up to 20 C atoms, vinylaromatics having up to 20 C atoms, ethylenically unsaturated nitriles, vinyl halides, vinyl ethers with alcohols comprising 1 to 10 C atoms, aliphatic hydrocarbons having 2 to 8 C atoms and one or two double bonds, (meth)acrylamides, C1 to C20 hydroxyalkyl (meth)acrylates, or mixtures of these monomers,

(e) 0.1 to 5 wt%, based on the sum of all the monomers, of at least one monomer having at least one acid group, and

(f) 0.1 to 5 wt%, preferably 0.2 to 3 wt%, based on the total amount of monomers, of at least one ethylenically unsaturated compound having at least one functional group selected from keto groups and aldehyde groups;

where the aqueous polymer dispersion comprises at least one compound A having at least two functional groups which are able to enter into a crosslinking reaction with the keto groups or with the aldehyde groups.

**2.** The use according to the preceding claim, wherein the monomers (c) are selected from ethyl acrylate and methyl methacrylate or a mixture thereof.

**3.** The use according to either of the preceding claims, wherein monomer (e) is selected from acrylic acid, methacrylic acid, and itaconic acid.

**4.** The use according to any of claims 1 to 3, wherein the monomers (f) are selected from the group consisting of acrolein, methacrolein, vinyl alkyl ketones having 1 to 20 C atoms in the alkyl radical, formylstyrene, (meth)acrylic acid alkyl esters having one or two keto or aldehyde groups or having one aldehyde and one keto group in the alkyl radical, N-oxoalkyl(meth)acrylamides, acetoacetyl (meth)acrylate, acetoacetoxyethyl (meth)acrylate, and diacetoneacrylamide.

**5.** The use according to any of claims 1 to 4, wherein the compound A is selected from the group consisting of compounds having hydrazide, hydroxylamine, oxime ether or amino groups.

**6.** The use according to any of claims 1 to 5, wherein compound A is a dicarboxylic dihydrazide having 2 to 10 C atoms, and wherein monomer (f) is selected from acetoacetyl (meth)acrylate, acetoacetoxyethyl (meth)acrylate, and diacetoneacrylamide.

**7.** The use according to any of claims 1 to 6, wherein compound A is adipic dihydrazide and wherein monomer (f) is diacetoneacrylamide.

**8.** The use according to any of the preceding claims, wherein the glass transition temperature of the polymer is from -25 to -15°C, where the glass transition temperature is determined by ASTM D 3418-08.

9. The use according to any of claims 1 to 8, wherein the molar ratio of the groups in compound A that are reactive with keto groups or with aldehyde groups to the keto groups and aldehyde groups of the monomer (f) is from 1:1.3 to 1.3:1.

10. The use according to any of claims 1 to 9, wherein the monomer mixture comprises no crosslinking monomers other than the monomers (f).

11. The use according to any of claims 1 to 10, wherein the monomer mixture comprises no n-butyl acrylate (b) .

12. The use according to any of the preceding claims, wherein the polymer is obtainable by emulsion polymerization of a monomer mixture consisting of

   (a) 40 to 70 wt%, based on the sum of all the monomers, of 2-ethylhexyl acrylate,
   (c) 25 to 55 wt%, based on the sum of all the monomers, of methyl methacrylate or a mixture of ethyl acrylate and methyl methacrylate,
   (e) 0.1 to 5 wt%, based on the sum of all the monomers, of at least one monomer having at least one acid group, selected from acrylic acid, methacrylic acid, and a mixture thereof, and
   (f) 0.2 to 3 wt%, based on the total amount of monomers, of at least one ethylenically unsaturated compound having at least one keto group, selected from the group consisting of acetoacetyl (meth)acrylate, acetoacetoxyethyl (meth)acrylate, and diacetoneacrylamide;

   and where compound A is a dicarboxylic dihydrazide having 2 to 10 C atoms.

13. The use according to any of the preceding claims, wherein the adhesive dispersion comprises additives selected from fillers, dyes, flow control assistants, thickeners, defoamers, plasticizers, pigments, wetting agents, UV stabilizers, and tackifiers.

14. The use according to any of the preceding claims, where a first substrate is laminated to a second substrate, the first substrate being a transparent polymeric film and the second substrate being paper, card, or board, and the lamination taking place under pressure and with heating.

15. The use according to claim 14, wherein the polymeric film, on the surface coming into contact with the adhesive dispersion, has hydrophilic groups, preferably generated by corona treatment.

16. The use according to the preceding claim, wherein the polymeric film is a corona-treated oPP film.

17. A method for high-gloss film lamination, having the following measures:

   (i) providing a first substrate selected from polymeric films, preferably from transparent polymeric films,
   (ii) providing a second substrate selected from paper, card, and board, the second substrate preferably being printed,
   (iii) applying an adhesive dispersion having the features relative to the adhesive dispersion from the preceding use claims, to at least one surface of the first and/or second substrate(s), with a subsequent drying step, and
   (iv) laminating the polymeric film onto the second substrate.

18. A laminate obtainable by the method according to the preceding method claim.

**Revendications**

1. Utilisation d'une dispersion d'adhésif pour le laminage brillant de films, la dispersion d'adhésif contenant au moins un polymère dispersé dans de l'eau, qui est formé par copolymérisation en émulsion d'un mélange de monomères, contenant :

   (a) 40 à 70 % en poids, par rapport à la somme de tous les monomères, d'acrylate de 2-éthylhexyle,
   (b) 0 à 10 % en poids, par rapport à la somme de tous les monomères, d'acrylate de n-butyle,
   (c) 25 à 55 % en poids, par rapport à la somme de tous les monomères, d'au moins un (méth)acrylate d'alkyle en C1 à C2,

(d) 0 à 10 % en poids, par rapport à la somme de tous les monomères, d'au moins un autre monomère, choisi dans le groupe constitué par les (méth)acrylates d'alkyle en C3 à C20 différents des monomères (a) à (b), les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons, les (méth)acrylamides, les (méth)acrylates d'hydroxyalkyle en C1 à C20 ou les mélanges de ces monomères,

(e) 0,1 à 5 % en poids, par rapport à la somme de tous les monomères, d'au moins un monomère contenant au moins un groupe acide, et

(f) 0,1 à 5 % en poids, de préférence 0,2 à 3 % en poids, par rapport à la quantité totale de monomères, d'au moins un composé éthyléniquement insaturé contenant au moins un groupe fonctionnel, choisi parmi les groupes céto et les groupes aldéhyde ;

la dispersion aqueuse de polymère contenant au moins un composé A, qui comprend au moins deux groupes fonctionnels, qui peuvent réaliser une réaction de réticulation avec les groupes céto ou avec les groupes aldéhyde.

2. Utilisation selon la revendication précédente, **caractérisée en ce que** les monomères (c) sont choisis parmi l'acrylate d'éthyle et le méthacrylate de méthyle ou leur mélange.

3. Utilisation selon l'une quelconque des revendications précédentes, **caractérisée en ce que** le monomère (e) est choisi parmi l'acide acrylique, l'acide méthacrylique et l'acide itaconique.

4. Utilisation selon l'une quelconque des revendications 1 à 3, **caractérisée en ce que** les monomères (f) sont choisis dans le groupe constitué par l'acroléine, la méthacroléine, les vinylalkylcétones contenant 1 à 20 atomes C dans le radical alkyle, le formylstyrène, les esters alkyliques de l'acide (méth)acrylique contenant un ou deux groupes céto ou aldéhyde ou contenant un groupe aldéhyde et un groupe céto dans le radical alkyle, les N-oxoalkyl(méth)acrylamides, le (méth)acrylate d'acétoacétyle, le (méth)acétate d'acétoacétoxyéthyle et le diacétonacrylamide.

5. Utilisation selon l'une quelconque des revendications 1 à 4, **caractérisée en ce que** le composé A est choisi dans le groupe constitué par les composés contenant des groupes hydrazide, hydroxylamine, éther d'oxime ou amino.

6. Utilisation selon l'une quelconque des revendications 1 à 5, **caractérisée en ce que** le composé A est un dihydrazide d'acide dicarboxylique contenant 2 à 10 atomes C, et **en ce que** le monomère (f) est choisi parmi le (méth)acrylate d'acétoéthyle, le (méth)acrylate d'acétoacétoxyéthyle et le diacétonacrylamide.

7. Utilisation selon l'une quelconque des revendications 1 à 6, **caractérisée en ce que** le composé A est le dihydrazide de l'acide adipique et **en ce que** le monomère (f) est le diacétonacrylamide.

8. Utilisation selon l'une quelconque des revendications précédentes, **caractérisée en ce que** la température de transition vitreuse du polymère est de - 25 à -15 °C, la température de transition vitreuse étant déterminée selon ASTM D 3418-08.

9. Utilisation selon l'une quelconque des revendications 1 à 8, **caractérisée en ce que** le rapport molaire entre les groupes réactifs avec les groupes céto ou avec les groupes aldéhyde du composé A et les groupes céto et aldéhyde du monomère (f) est de 1:1,3 à 1,3:1.

10. Utilisation selon l'une quelconque des revendications 1 à 9, **caractérisée en ce que** le mélange de monomères ne comprend pas d'autres monomères réticulants en plus des monomères (f).

11. Utilisation selon l'une quelconque des revendications 1 à 10, **caractérisée en ce que** le mélange de monomères ne comprend pas d'acrylate de n-butyle (b).

12. Utilisation selon l'une quelconque des revendications précédentes, **caractérisée en ce que** le polymère peut être obtenu par polymérisation en émulsion d'un mélange de monomères constitué par :

(a) 40 à 70 % en poids, par rapport à la somme de tous les monomères, d'acrylate de 2-éthylhexyle,

(c) 25 à 55 % en poids, par rapport à la somme de tous les monomères, de méthacrylate de méthyle ou d'un mélange d'acrylate d'éthyle et de méthacrylate de méthyle,

(e) 0,1 à 5 % en poids, par rapport à la somme de tous les monomères, d'au moins un monomère contenant au moins un groupe acide, choisi parmi l'acide acrylique, l'acide méthacrylique et leur mélange, et

(f) 0,2 à 3 % en poids, par rapport à la quantité totale de monomères, d'au moins un composé éthyléniquement insaturé contenant au moins un groupe céto, choisi dans le groupe constitué par le (méth)acrylate d'acétoacétyle, le (méth)acrylate d'acétoacétoxyéthyle et le diacétonacrylamide ;

le composé A étant un dihydrazide d'acide dicarboxylique contenant 2 à 10 atomes C.

**13.** Utilisation selon l'une quelconque des revendications précédentes, **caractérisée en ce que** la dispersion d'adhésif contient des additifs, choisis parmi les charges, les colorants, les adjuvants d'étalement, les épaississants, les antimousses, les plastifiants, les pigments, les agents mouillants, les agents de protection contre les UV et les agents collants.

**14.** Utilisation selon l'une quelconque des revendications précédentes, dans laquelle un premier substrat est laminé avec un deuxième substrat, le premier substrat étant un film polymère transparent et le deuxième substrat étant un papier, un carton ou un papier-carton, le laminage ayant lieu sous pression et chauffage.

**15.** Utilisation selon la revendication 14, **caractérisée en ce que** le film polymère comprend des groupes hydrophiles sur la surface rentrant en contact avec la dispersion d'adhésif, de préférence formés par traitement corona.

**16.** Utilisation selon la revendication précédente, **caractérisée en ce que** le film polymère est un film d'oPP ayant subi un traitement corona.

**17.** Procédé de laminage brillant de films, qui comprend les mesures suivantes :

(i) la préparation d'un premier substrat, choisi parmi les films polymères, de préférence à base de films polymères transparents,

(ii) la préparation d'un deuxième substrat, choisi parmi le papier, le carton et le papier-carton, le deuxième substrat étant de préférence imprimé,

(iii) l'application d'une dispersion d'adhésif, qui présente les caractéristiques relatives à la dispersion d'adhésif des revendications d'utilisation précédentes, sur au moins une surface du premier et/ou du deuxième substrat avec une étape de séchage ultérieure, et

(iv) le laminage du film polymère sur le deuxième substrat.

**18.** Produit laminé, pouvant être obtenu par le procédé selon la revendication de procédé précédente.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03011993 A
- EP 0900651 A
- EP 2719532 A
- EP 1420055 A
- EP 0622434 A
- EP 0941259 A
- DE 2722097 A
- DE 2061213 A
- DE 2207209 A
- EP 81083 A

### In der Beschreibung aufgeführte Nicht-Patentliteratur

- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Makromolekulare Stoffe. **HOUBEN-WEYL.** Methoden der organischen Chemie. Georg-Thieme-Verlag, 1961, vol. XIV/1, 411-420
- **W. MÄCHTLE.** *Makromolekulare Chemie,* 1984, vol. 185, 1025-1039